## Europäisches Patentamt

## European Patent Office

## Office européen des brevets

(19)

(11) Veröffentlichungsnummer: **0 235 327**
**B1**

(12) ## EUROPÄISCHE PATENTSCHRIFT

(45) Veröffentlichungstag der Patentschrift:
**22.08.90**

(51) Int. Cl.⁵: **B23B 31/02**

(21) Anmeldenummer: **86102745.6**

(22) Anmeldetag: **03.03.86**

(54) Werkzeughalter.

(43) Veröffentlichungstag der Anmeldung:
**09.09.87 Patentblatt 87/37**

(45) Bekanntmachung des Hinweises auf die Patenterteilung:
**22.08.90 Patentblatt 90/34**

(84) Benannte Vertragsstaaten:
**AT BE CH DE FR GB IT LI NL SE**

(56) Entgegenhaltungen:
DE-B- 1 266 105
GB-A- 303 793
US-A- 2 435 396
US-A- 2 524 852
US-A- 2 567 498

(73) Patentinhaber: **Dihart AG, Industriestrasse 2,
CH-4657 Dulliken(CH)**

(72) Erfinder: **Büttiker, Otto, Dünnernstrasse 795,
CH-4614 Hägendorf(CH)**
Erfinder: **Christoffel, John, Bleumatthöhe 19,
CH-5264 Gipf-Oberfrick(CH)**

(74) Vertreter: **Quehl, Horst M., Dipl.-Ing.,
Seestrasse 640 Postfach 90,
CH-8706 Meilen/Zürich(CH)**

ACTORUM AG

## Beschreibung

Die Erfindung betrifft einen Werkzeughalter mit den Merkmalen des Oberbegriffs des Patentanspruchs 1.

Ein Werkzeughalter dieser Art ist bekannt durch die US-A 2 435 396. Er hat zwei Halterteile, von denen der eine den anderen mit einem glockenförmigen Teil ringförmig umschliesst. Bei ihm erfolgt die Achsausrichtung mittels einer Stelleinrichtung, die aus vier radialgerichteten Stellschrauben besteht, die in gleichmässigem Abstand voneinander am Umfang des umschliessenden Halterteiles vorgesehen sind. Eine derartige Ausrichtung ist jedoch sehr zeitaufwendig und ungenau, da jedesmal vier Stellschrauben aufeinander abgestimmt verstellt werden müssen.

Für die Achsausrichtung eines in dem Spannfutter einer Drehbank gehaltenen Werkstückes ist es durch die DE-B 1 266 105 weiterhin bekannt, an einem an der Arbeitsspindel befestigten Flansch vorübergehend einen Stellreiter an der Umfangsstelle zu fixieren, von der aus eine radiale Korrektur des Spannfutters der Drehbank vorgenommen werden soll. Durch seinen Eingriff in eine Umfangsnut des das Spannfutter überragenden Flansches lässt er sich in Umfangsrichtung verschieben, so dass derselbe Reiter für die Achsausrichtung in jeder radialen Richtung verwendet werden kann.

Der Erfindung liegt die Aufgabe zugrunde, einen Werkzeughalter der genannten Art zu finden, der bei einfacher Konstruktion eine schnelle und genaue Ausrichtung der Achse eines Werkzeuges ermöglicht und der dabei einfach zu handhaben ist. Die Lösung dieser Aufgabe erfolgt aufgrund der kennzeichnenden Merkmale des Patentanspruchs 1. Vorteilhafte Ausgestaltungen der Erfindung sind Gegenstand der abhängigen Patentansprüche und sind der folgenden Beschreibung eines Ausführungsbeispieles zu entnehmen. Es zeigt:

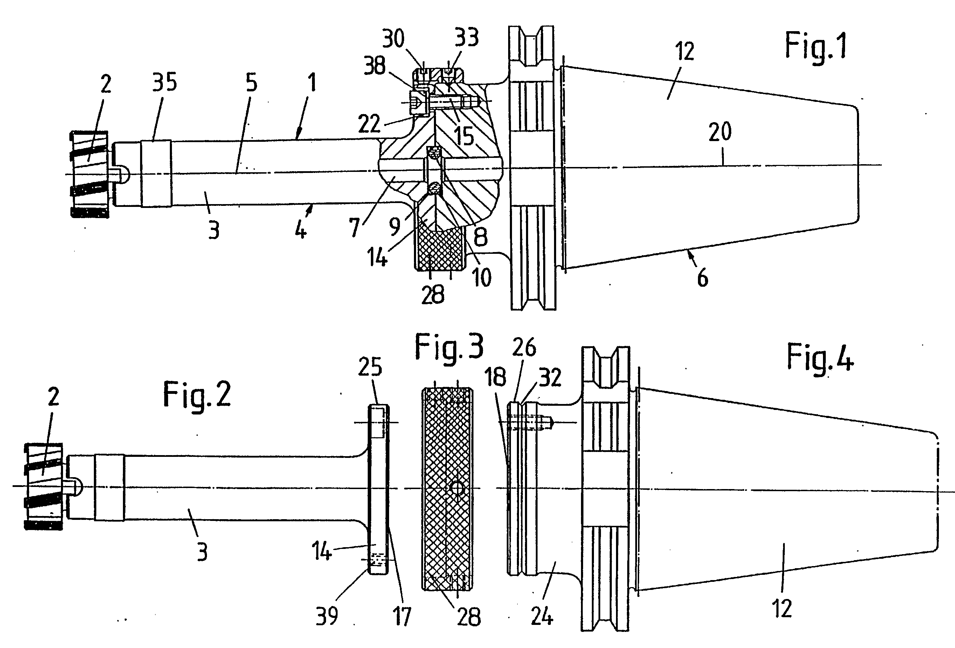

Fig.1 eine teilweise geschnittene Seitenansicht eines erfindungsgemässen Werkzeughalters,
Fig.2 den werkzeugseitigen Halterteil des Werkzeughalters nach Fig.1,
Fig.3 den Stellring des Werkzeughalters nach Fig.1 und
Fig.4 den werkzeugmaschinenseitigen Halterteil des Werkzeughalters nach Fig.1.

Der dargestellte Werkzeughalter 1 trägt als Werkzeug 2 einen Reibahlenkopf, der auf übliche Weise, beispielsweise bekannt durch den Firmenprospekt der Anmelderin, im Aufnahmeschaft 3 des Halterteiles 4 befestigt ist. Seine Achse ist somit relativ zur Achse 5 des Halterteiles 4 fixiert. Für die Schmierung und Kühlung des Werkzeuges 2 erstreckt sich, auf an sich bekannte Weise, durch beide Halterteile 4 und 6 ein zentraler Kühlkanal 7, und ein O-Ring 8, eingesetzt in je einem Kanalabsatz 9,10, bewirkt eine Abdichtung an der Uebergangsstelle des Kühlkanals 7 zwischen beiden Halterteilen 4,6.

Der in die Werkzeugaufnahme einer Werkzeugmaschine einzusetzende andere Halterteil 6 hat einen konischen Halterschaft 12 mit standardisierten Abmessungen (z.B. DIN 69871A).

Die Verbindung zwischen beiden Halterteilen 4,6 erfolgt, ähnlich wie bei einer Rohrflanschverbindung, indem ein an den Aufnahmeschaft 3 angeformter Flansch 14 durch mindestens drei achsparallele Schrauben 15 kraftschlüssig gegen den Halterteil 6 oder einen an diesem angeformten Gegenflansch gespannt ist. Die somit kraftschlüssig miteinander verbundenen Grenzflächen 17,18 verlaufen senkrecht zu den Achsen 5,20 der Halterteile 4,6 und haben eine feinbearbeitete Oberfläche, so dass sie sich mit hoher Präzision im Stellbereich des erfindungsgemässen Werkzeughalters 1 gegeneinander in die gewünschte Ausrichtposition verschieben lassen, wenn der Kraftschluss zwischen ihnen durch Lockern der Spannschrauben 15 auf ein ausreichendes Mass verringert wird. Die für die Hindurchführung der Spannschrauben 15 im Flansch 14 des Halterteiles 4 vorgesehenen Flanschbohrungen 22 sind im Durchmesser ausreichend grösser als die Spannschrauben, so dass diese Verschiebebewegung zur fluchtenden Ausrichtung der Achsen 5,20 relativ zueinander ausgeführt werden kann. Da die erforderlichen Achskorrekturen in der Regel nur sehr geringe Achsfehler von Werkzeugen auszugleichen haben, kann die für vergleichbare Flanschlöcher verwendete Durchmesserdifferenz ausreichend sein.

Die aneinandergrenzenden Bereiche beider Halterteile 4,6, d.h. der Flansch 14 an dem Aufnahmeschaft 3 und der an diesem anliegende Befestigungsansatz 24, haben eine kreiszylindrische Umfangsfläche 25,26, die von einem um die Achse 20 des Halterteiles 6 drehbaren Stellring 28 gemeinsam umschlossen sind. Dabei ist der Durchmesser des Flansches 14 etwas geringer als derjenige des Befestigungsansatzes 24, bzw. ausreichend geringer als der Innendurchmesser des Stellringes 28, so dass der Halterteil 4 mit seinem Flansch 14 durch eine radial gerichtete Stellschraube 30 des Stellringe 28 innerhalb von diesem hin- und herverschiebbar ist, um die Achsausrichtung vornehmen zu können. Erfindungsgemäss wird dabei nur eine Stellschraube 30 am Stellring 28 verwendet, die sich durch Verdrehen des Stellringes 28 auf dem Befestigungsansatz 24 in die gewünschte Stellrichtung drehen lässt. Der Stellring 28 ist hierfür auf dem kreiszylindrischen Befestigungsansatz 24 verdrehbar geführt, wofür in diesem eine umlaufende Führungsrille 32 vorgesehen ist, in die am Umfang des Stellringes 28 gleichmässig verteilte Führungsschrauben 33 eingreifen, die wie die Stellschraube 30 als Gewindestifte mit Innensechskant ausgeführt sein können. Ihr spitzes Ende greift in die v-förmige Führungsnut ein. Für eine leichte Verstellbarkeit des Stellringes 28 von Hand, hat dieser an seinem Umfang eine Rändelung, die durch Kreuzschraffur in der Zeichnung dargestellt ist.

Für die genaue Ausrichtung der Drehachse 5 des das Werkzeug 2 tragenden Halterteiles 4 kann z.B. auf eine geschliffene Bundfläche 35 des Aufnahmeschaftes 3 der Taststift einer Mikrometer-Messuhr aufgesetzt werden. Die Stellschraube 33 wird durch Verdrehen des Stellringes 28 auf die gleiche Winkelposition am Halterteil 4 gestellt wie die Winkelposition, in der durch das Messinstrument das grösste Mass, d.h. die grösste Achsabweichung, festgestellt worden ist. Durch Verdrehen der Stellschraube schiebt sich dann der Halterteil 4 in die Richtung, in der die Achskorrektur vorzunehmen ist. Anschliessend wird die Ausrichtung des Halterteiles 4 und damit des Werkzeuges 2 erneut mittels des Messinstrumentes kontrolliert und, falls erforderlich, auf gleiche Weise eine neue Einstellung mittels der Stellschraube durchgeführt. Die Spannschrauben 15 sind dabei nur so weit angespannt, dass eine spielfreie Verschiebung der Grenzflächen 17,18 beider Halterteile 4,6 aufeinander mit Selbsthaftung möglich ist. Die hierfür erforderliche Einstellposition der Spannschrauben 15 erfordert eine wesentlich geringere Genauigkeit, bzw. die Handhabung wird wesentlich erleichtert, wenn federelastische Spannelemente verwendet werden oder wenn die Spannschrauben 15 jeweils durch einen Federring 38 oder eine Tellerfeder 38 ergänzt werden, über die der Kopf der Spannschraube 15 auf den Flansch 14 wirkt. Die Grenzflächen 17,18 liegen bei einer solchen Ausführung während der Durchführung der Achskorrektur somit unter dem Druck dieser Federelemente 38 unter Federvorspannung aneinander und lassen sich folglich durch die Stellschraube 30 leicht und kontrolliert verschieben, ohne dass eine unkontrollierte Verschiebung unter dem Einfluss der Scherkraft möglich ist. Nach Beendigung der Achskorrektur werden die Spannschrauben wieder voll angespannt, so dass die Flanschverbindung zwischen beiden Halterteilen 4,6 ohne Achsverstellung die Arbeitskräfte des Werkzeuges 2 aufnehmen kann.

Der Werkzeughalter 1 kann zusätzlich auch so ausgeführt sein, dass ausserdem auch eine Winkelkorrektur der Achse 5 möglich ist. Hierfür können im Flansch 14 zusätzlich axialgerichtete Gewindelöcher 39 vorgesehen sein, so dass in diese eingeschraubte Abdrückschrauben gegen die Grenzfläche 18 des anderen Halterteiles 6 drücken und somit eine Winkelverstellung zwischen den Achsen 5,20 hervorrufen.

## Patentansprüche

1. Werkzeughalter zum Ausgleich von Achsfehlern, mit zwei relativ zueinander verstellbaren Halterteilen (4, 6), von denen einer (4) an seinem freien Ende eine Werkzeugaufnahme (3) aufweist und der andere (6) für die Verbindung in der Werkzeugaufnahme einer Werkzeugmaschine ausgebildet ist, wobei beide Halterteile (4, 6) an einer dem anderen Halterteil zugekehrten Stirnseite eine senkrecht zu seiner Längsachse (5, 20) verlaufende ebene Grenzfläche (17, 18) aufweisen, diese Grenzflächen beider Halterteile (4, 6) durch verstellbare, axial wirkende Spannmittel (15) kraftschlüssig aneinander gehalten sind und eine quer zur Längsachse (20) zwischen beiden Halterteilen (4, 6) wirkende Stelleinrichtung (30) für die Querverschiebung des Halterteiles (4) entlang der Grenzfläche (18) des anderen Halterteiles (6) vorgesehen ist, dadurch gekennzeichnet, dass die Stelleinrichtung (30) aus einer Stellschraube besteht, die sich an einem um die Achse (20) drehbaren Stellring (28) befindet, wobei beide Halterteile (4, 6) angrenzend an die ebene Grenzfläche (17, 18) kreiszylindrische Umfangsflächen (25, 26) aufweisen, die Stelleinrichtung (30) für die Verstellung an der Umfangsfläche (25) des einen Halterteiles (4) anliegt und der Stellring (28) an der kreiszylindrischen Umfangsfläche (26) des anderen Halterteiles (6) verdrehbar geführt ist.

2. Werkzeughalter nach Anspruch 1, dadurch gekennzeichnet, dass zwischen beiden Halterteilen (4, 6) eine Flanschverbindung mit einem Flansch (14) an mindestens einem der Halterteile (4) vorgesehen ist.

3. Werkzeughalter nach Anspruch 2, dadurch gekennzeichnet, dass die kreiszylindrische Umfangsfläche (25), an der die Stelleinrichtung (30) für die Verstellung anliegt, einen kleineren Durchmesser hat als die kreiszylindrische Umfangsfläche (26) des anderen Halterteiles (6).

4. Werkzeughalter nach Anspruch 2, dadurch gekennzeichnet, dass in der den Stellring (28) führenden Umfangsfläche (26) eine Führungsnut (32) für den Eingriff eines am Stellring (28) befestigten Führungselements (33) vorgesehen ist.

5. Werkzeughalter nach Anspruch 4, dadurch gekennzeichnet, dass die Stelleinrichtung (30) und das Führungselement (33) Gewindestifte sind, die in radiale Gewindebohrungen des Stellringes (28) versenkt eingreifen.

6. Werkzeughalter nach Anspruch 5, dadurch gekennzeichnet, dass die Umfangsfläche des Stellringes (28) eine Profilierung aufweist.

7. Werkzeughalter nach Anspruch 1, gekennzeichnet durch einen sich durch beide Halterteile (4,6) erstreckenden axialen Kühlkanal (7), wobei die Grenzflächen (17,18) für die Querverschiebung der Achsen (5,20) beider Halterteile (4,6) relativ zueinander gegenüber dem Kühlkanal (7) durch einen O-Ring (8) abgedichtet sind.

8. Werkzeughalter nach Anspruch 1, dadurch gekennzeichnet, dass in mindestens einem der Halterteile (4,6) axial gerichtete Gewindebohrungen (39) vorgesehen sind, die bis an die Grenzfläche (17,18) des anderen Halterteiles (4,6) reichen, für die Aufnahme eienr Andruckschraube, zum Ausgleich von Winkelfehlern der Werkzeugachse.

9. Werkzeughalter nach Anspruch 1, dadurch gekennzeichnet, dass die Spannmittel (15) mit einem Federelement (38) kombiniert sind.

10. Werkzeughalter nach Anspruch 9, dadurch gekennzeichnet, dass die Spannmittel (15) Kopfschrauben und das Federelement (38) ein Federring oder eine Tellerfeder ist.

## Claims

1. A tool holder for compensating axial errors, with two holder parts (4, 6) adjustable relative to one another, whereof one (4) is provided at its free end with a tool mounting (3) and the other (6) is constructed for connection in the tool mounting of a machine tool, wherein both holder parts (4, 6) have a planar interface (17, 18) on a front face facing the other holder part which is at right angles to the longitudinal axis (5, 20) thereof, said interfaces of the two holder parts (4, 6) being non-positively held against one another by adjustable, axially acting clamping means (15) and a setting device (30) acting at right angles to the longitudinal axis (20) between the two holder parts (4, 6) is provided for the transverse displacement of the holder part (4) along the interface (18) of the other holder part (6), characterized in that the setting device (30) consists of a setscrew, provided on a setting ring which is rotatable about the axis (20) , whereby both holder parts (4, 6) in the vicinity of the planar interface (17, 18) are provided with a circular cylindrical circumferential surface (25, 26), the setting device (30) engaging on the circumferential surface (25) of one holder part (4) and the setting ring (28) is rotatable guided at the circular cylindrical circumferential surface (26) of the other holder part (6).

2. A tool holder according to claim 1, characterized in that between the two holder parts (4, 6) is provided a flange connection with a flange (14) on at least one of the holder parts (4).

3. A tool holder according to claim 2, characterized in that the circular cylindrical circumferential surface (25) engaged by the setting device (30) has a smaller diameter than the circular cylindrical circumferential surface (26) of the other holder part (6).

4. A tool holder according to claim 2, characterized in that a guide groove (32) for the engagement of a guide member (33) fixed to the setting ring (28) is provided in the circumferential surface (26) guiding said setting ring (28).

5. A tool holder according to claim 4, characterized in that the setting device (30) and the guide member (33) are threaded pins, which engage in countersunk manner in radial tapholes of the setting ring (28).

6. A tool holder according to claim 1, characterized in that the circumferential surface of the setting ring (28) has a profiling.

7. A tool holder according to claim 1, characterized in that an axial cooling duct (7) extending through both holder parts (4, 6) is provided, the interfaces (17, 18) for the transverse displacement of the axes (5, 20) of the two holder parts (4, 6) relativ to one another being sealed with respect to the cooling duct (7) by an O-ring (8).

8. A tool holder according to claim 1, characterized in that axially directed tapholes (39) are provided in at least one of the holder parts (4, 6) and extend up to the interface (17, 18) of the other holder part (4, 6) and serve to receive a forcing screw for compensating angular errors of the tool axis.

9. A tool holder according to claim 1, characterized in that the clamping means (15) are combined with a spring member (38).

10. A tool holder according to claim 9, characterized in that the clamping means (15) are cap screws and the spring member (38) is a spring washer or cup spring.

**Revendications**

1. Porte-outil pour le rattrapage de défauts de positionnement d'axe, comportant deux pièces (4, 6) du porte-outil pouvant se déplacer l'une par rapport à l'autre, dont l'une (4) présente, à son extrémité libre, un organe de réception (3) de l'outil et l'autre (6) est réalisée de façon à assurer la liaison avec l'organe de réception d'une machine-outil, étant donné que les deux pièces (4, 6) du porte-outil présentent des interfaces (17, 18) planes, orientées perpendiculairement à l'axe longitudinal (5, 20) du porte-outil, sur leur faces d'extrémité tournées l'une vers l'autre, que ces interfaces des deux pièces (4, 6) du porte-outil sont maintenues à force l'une contre l'autre par des moyens de serrage (15) réglables, agissant axialement, et qu'un dispositif de positionnement (30) agissant entre les deux pièces (4, 6) du porte-outil, perpendiculairement à l'axe longitudinal (20), est prévu pour le déplacement transversal de la pièce (4) du porte-outil le long de l'interface (18) de l'autre pièce (6) du porte-outil, caractérise en ce que le dispositif de positionnement (30) est constitué d'une vis de positionnement qui se trouve sur une bague de positionnement (28) tournant autour de l'axe (20), étant entendu que les deux pièces (4, 6) du porte-outil présentent, sur les interfaces (17, 18) planes, des surfaces périphériques (25, 26) ayant la forme de cylindres de révolution, que le dispositif de positionnement (30) pour le réglage se trouve sur la surface périphérique (25) de l'une (4) des pièces du porte-outil et que la bague de positionnement (28) est guidée en rotation sur la surface périphérique (26), ayant la forme d'un cylindre de révolution, de l'autre (6) des pièces du porte-outil.

2. Porte-outil suivant la revendication 1, caractérisé en ce qu'est prévue, entre les deux pièces (4, 6) du porte-outil, une liaison par bride comportant une bride (14) au moins sur l'une (4) des pièces du porte-outil.

3. Porte-outil suivant la revendication 2, caractérisé en ce que la surface périphérique (25), ayant la forme d'un cylindre de révolution, sur laquelle se trouve le dispositif de positionnement (30) pour le réglage, a un diamètre plus petit que la surface périphérique (26), ayant la forme d'un cylindre de révolution, de l'autre (6) des pièces du porte-outil.

4. Porte-outil suivant la revendication 2, caractérisé en ce que, dans la surface périphérique (26) guidant la bague de positionnement (28), une gorge circulaire de guidage (32) est prévue pour recevoir un organe de guidage (33) fixé sur la bague de positionnement (28).

5. Porte-outil suivant la revendication 4, caractérisé en ce que le dispositif de positionnement (30) et l'organe de guidage (33) sont des tiges filetées qui prennent appui en s'enfonçant dans des alésages filetés de la bague de positionnement (28).

6. Porte-outil suivant la revendication 5, caractérisé en ce que la surface périphérique de la bague de positionnement (28) présente un profilage.

7. Porte-outil suivant la revendication 1, caractérisé par un canal axial de refroidissement (7) traversant les deux pièces (4, 6) du porte-outil, l'étanchéité des interfaces (17, 18), entre elles, étant assurée au moyen d'un joint torique (8) pour la traversée des axes (5, 20) des deux pièces (4, 6) du porte-outil.

8. Porte-outil suivant la revendication 1, caractérisé en ce que des alésages filetés (39), dirigés axialement, sont prévus dans au moins l'une des deux pièces (4, 6) du porte-outil et dépassent jusqu'à l'interface (17, 18) de l'autre pièce (4, 6) du porte-outil pour recevoir des vis de pression, pour rattraper des défauts de positionnement d'axe.

9. Porte-outil suivant la revendication 1, caractérisé en ce que les moyens de serrage (15) sont combinés avec un organe faisant ressort (38).

10. Porte-outil suivant la revendication 9, caractérisé en ce que les moyens de serrage (15) sont des têtes de vis et que l'organe faisant ressort (38) est une rondelle-ressort ou un disque ressort.

Fig.1

Fig.2

Fig.3

Fig.4

EP 0 235 327 B1